# FASCICULE DE BREVET EUROPEEN

(11) **EP 4 154 109 B1**
(45) Date de publication et mention de la délivrance du brevet: **11.02.2026**
(21) Numéro de dépôt: 21725223.8
(22) Date de dépôt: 18.05.2021
(51) Int. Cl.: G06F 9/455

(54) **PROCÉDÉ DE CONTRÔLE D'UN SYSTÈME INFORMATIQUE DISTRIBUÉ ET DISPOSITIFS ASSOCIÉS**
VERFAHREN ZUR KONTROLLE EINES VERTEILTEN RECHNERSYSTEMS UND DAZUGEHOERIGE VORRICHTUNGEN
METHOD FOR CONTROLING A DISTRIBUTED COMPUTING SYSTEM AND ASSOCIATED DEVICES

(30) Priorité: 20.05.2020 FR 2005149
(43) Date de publication de la demande: 29.03.2023
(73) Titulaire: Byo Networks, 91120 Palaiseau (FR)
(72) Inventeur: TIRAT, Olivier, 91400 ORSAY (FR)
(74) Mandataire: Lavoix
(86) Numéro de dépôt international: PCT/EP2021/063111
(87) Numéro de publication internationale: WO 2021/233897

(56) Documents cités:
- US-A1- 2012 278 802
- US-A1- 2015 222 480
- US-A1- 2018 074 839
- LOWE SCOTT: "Introducing Linux Network Namespaces - Scott's Weblog - The weblog of an IT pro focusing on cloud computing, Kubernetes, Linux, containers, and networking", 4 September 2013 (2013-09-04), pages 1 - 6, XP055794718, Retrieved from the Internet <URL:https://blog.scottlowe.org/2013/09/04/introducing-linux-network-namespaces/> [retrieved on 20210413]
- KASHYAP THIMMARAJU, SAAD HERMAK, GÁBOR RÉTVÁRI, STEFAN SCHMID: "MTS : Bringing Multi-Tenancy to Virtual Networking", 10 July 2019 (2019-07-10), pages 549 - 564, XP061033508, Retrieved from the Internet <URL:https://www.usenix.org/sites/default/files/atc19_full_proceedings_interior.pdf> [retrieved on 20190710]
- RYOTA KAWASHIMA: "vNFC: A Virtual Networking Function Container for SDN-Enabled Virtual Networks", NETWORK CLOUD COMPUTING AND APPLICATIONS (NCCA), 2012 SECOND SYMPOSIUM ON, IEEE, 3 December 2012 (2012-12-03), pages 124 - 129, XP032339560, ISBN: 978-1-4673-5581-0, DOI: 10.1109/NCCA.2012.18

## Description

La présente invention concerne un procédé de contrôle d'un système informatique distribué. La présente invention se rapporte également à une machine virtuelle, un système informatique distribué impliqués dans le procédé de contrôle.

La présente invention se rapporte au domaine de l'informatique en nuage ou informatique distribuée qui désigne l'accès à des services informatiques (serveurs, stockage, mise en réseau, logiciels) via Internet (le « cloud » ou « nuage ») via un opérateur fournissant une infrastructure de réseau spécifique.

Dans le cas d'un réseau de type public (aussi désigné par l'expression « cloud public ») ou d'un réseau de type mixte public et privé, un utilisateur final (par exemple une société) utilise l'infrastructure de l'opérateur pour faire fonctionner des machines virtuelles.

En informatique, une machine virtuelle (souvent désigné sous l'abréviation VM sui renvoie à la dénomination anglaise de « virtual machine ») est une illusion d'un appareil informatique créée par un logiciel d'émulation ou instanciée sur un hyperviseur. Le logiciel d'émulation simule la présence de ressources matérielles et logicielles telles que la mémoire, le processeur, le disque dur, voire le système d'exploitation et les pilotes, permettant d'exécuter des programmes dans les mêmes conditions que celles de la machine simulée.

Plus spécifiquement, une telle infrastructure de réseau permet à l'utilisateur de la machine virtuelle d'accéder à des programmes, des données ou des services que les machines virtuelles produisent.

L'infrastructure de réseau est également chargée de la configuration initiale des machines virtuelles durant la phase de première instanciation de celles-ci. Une telle instanciation implique d'une part une exécution de programmes fournis par l'opérateur pour adapter la machine virtuelle à l'infrastructure et d'autre part une configuration du réseau de l'infrastructure pour permettre la création de la machine virtuelle.

De ce fait, pour migrer une machine virtuelle d'une infrastructure d'un premier opérateur vers une autre infrastructure d'un deuxième opérateur, il convient de reconstruire l'ensemble des interactions que la machine virtuelle a avec l'infrastructure du premier opérateur pour passer à celle du deuxième opérateur. Cela suppose l'intervention de l'utilisateur de la machine virtuelle et deux opérateurs, de sorte que la portabilité de la machine virtuelle est faible.

Il est connu du document US 2018/0074839 A1 des systèmes, des procédés et des supports informatiques permettant de configurer un réseau. Plusieurs dispositifs virtuels sont créés. Chacun de ces dispositifs est associé à un conteneur virtuel correspondant. Les dispositifs virtuels sont ensuite connectés à un dispositif réel, lui-même associé à un conteneur hôte, afin de permettre la communication entre les dispositifs virtuels et le dispositif réel à travers un espace de noms du réseau.

Il est également connu du document intitulé « Introducing Linux Network Namespaces - Scott's Weblog » , 04 septembre 2013, pages 1 à 6 , extrait de l'Internet URL:https://blog.scottlowe.org/2013/09/04/introducing-linux-network-namespaces/, l'utilisation d'espace de nommage réseau.

Il existe donc un besoin pour un procédé de contrôle d'un système informatique distribué permettant une meilleure portabilité d'une machine virtuelle tout en conservant un bon niveau de sécurité de l'ensemble des éléments faisant partie du système informatique distribué.

A cet effet, la présente description propose un procédé de contrôle d'un système informatique distribué, le procédé étant selon la revendication 1.

Suivant des modes de réalisation particuliers, le procédé de contrôle comprend une ou plusieurs des caractéristiques des revendications 2 à 5 lorsque cela est techniquement possible.

La présente description décrit également une machine virtuelle propre à mettre en œuvre un procédé de contrôle d'un système informatique distribué, la machine virtuelle étant selon la revendication 6.

La présente description concerne aussi un système informatique distribué comprenant au moins une machine virtuelle telle que précédemment décrite.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un système informatique distribué,
- figure 2, une représentation schématique d'une partie d'un tel système informatique distribué, et

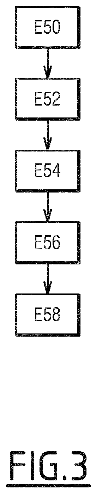

- figure 3, un ordinogramme d'un exemple de mise en œuvre d'un procédé de contrôle du système informatique distribué de la figure 1.

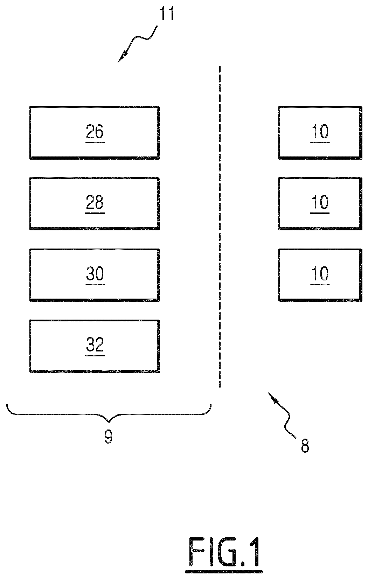

Un système informatique distribué 8 est illustré schématiquement sur la figure 1.

Le système informatique distribué 8 est une infrastructure 9 contrôlée par un opérateur en liaison avec des terminaux 10 (ordinateurs ici). Un tel opérateur est souvent dénommé opérateur de cloud en référence à la terminologie anglaise de « cloud » parfois traduite par le terme « informatique en nuage ». Pour éviter toute confusion dans la suite de cette description, la dénomination d'opérateur de cloud est utilisée pour désigner l'opérateur.

Il est à noter que par « contrôle », il est entendu un contrôle d'au moins une partie des éléments du système informatique distribué 8 (soit du côté terminal, soit du côté infrastructure 9).

Dans l'exemple décrit, le contrôle du système informatique distribué 8 correspond à un droit d'accès maximal à l'infrastructure 9, qui est seulement assigné à l'opérateur de cloud.

Par le terme « maximal », il est ici évalué l'extension du contrôle attribué.

Le contrôle de l'infrastructure 9 est, par exemple, réalisée par un ensemble de logiciels appelés orchestrateur ou VIM. L'acronyme VIM renvoie à la dénomination anglaise de « Virtual Infrastructure Manager » qui signifie littéralement contrôleur d'infrastructure virtuelle.

Plus précisément, le système informatique distribué 8 comporte, du côté terminal, des ordinateurs 10 propres à émuler une machine virtuelle MV et, du côté infrastructure 9, un ensemble d'éléments réseau 11.

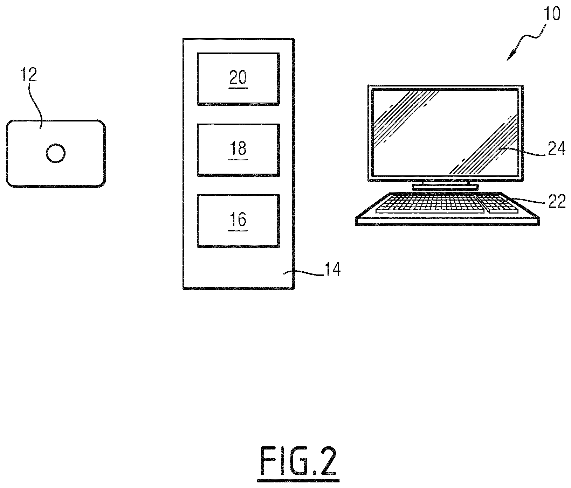

Un ordinateur 10 est illustré plus spécifiquement sur la figure 2 avec un produit programme d'ordinateur 12. L'interaction du produit programme d'ordinateur 12 avec l'ordinateur 10 permet de mettre en œuvre une machine virtuelle MV qui est, elle-même, propre à mettre en œuvre le contrôle du système informatique distribué 8. Le procédé de contrôle est ainsi un procédé mis en œuvre par ordinateur.

Plus généralement, l'ordinateur 10 est un calculateur électronique propre à manipuler et/ou transformer des données représentées comme des quantités électroniques ou physiques dans des registres du calculateur et/ou des mémoires en d'autres données similaires correspondant à des données physiques dans des mémoires, des registres ou d'autres types de dispositifs d'affichage, de transmission ou de mémorisation.

Il est à noter que, dans la présente description, l'expression « propre à » signifie indifféremment « adapté pour », « adapté à » ou « configuré pour ».

L'ordinateur 10 comporte un processeur 14 comprenant une unité de traitement de données 16, des mémoires 18 et un lecteur 20 de support d'informations. Selon l'exemple présenté, l'ordinateur 10 comprend un clavier 22 et une unité d'affichage 24.

Le produit programme d'ordinateur 12 comporte un support lisible d'informations.

Un support lisible d'informations est un support lisible par l'ordinateur 10, usuellement par le lecteur 20. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « floppy disk »), un disque optique, un CD-ROM, un disque magnéto-optique, une mémoire ROM, une mémoire RAM, une mémoire EPROM, une mémoire EEPROM, une carte magnétique ou une carte optique.

Par extension aux environnements virtualisés tout logiciel reproduisant à l'identique les comportements des supports lisibles d'information énumérés précédemment est également un support lisible d'information.

Sur un quelconque des supports lisibles d'informations précédent est mémorisé un programme d'ordinateur comprenant des instructions de programme.

Le programme d'ordinateur est chargeable sur l'unité de traitement de données 16 et est adapté pour entraîner la création de la machine virtuelle MV.

La machine virtuelle MV est destinée à fournir une interface informatique à un utilisateur. Dans l'exemple proposé, l'utilisateur de la machine virtuelle MV n'est pas l'opérateur.

Ainsi, dans un fonctionnement sécurisé, l'utilisateur ne dispose pas d'un droit d'accès maximal à l'infrastructure (au contraire seulement assigné à l'opérateur de cloud) mais dispose du droit d'accès maximal pour la machine virtuelle MV (pour laquelle l'opérateur de cloud ne devrait pas disposer des droits d'accès maximal).

Outre les services fournis à l'utilisateur, la machine virtuelle MV est propre à mettre en œuvre un procédé de contrôle du système informatique distribué 8.

L'ensemble d'éléments réseau 11 regroupe des éléments réseau.

Par définition, un élément réseau est un composant faisant partie d'un réseau.

Selon l'exemple représenté, l'ensemble d'éléments réseau 11 comporte un commutateur 26, un routeur 28, un pare-feu 30 et une interface réseau 32, par exemple un port.

Dans le cas général, le système informatique distribué 8 comporte plus d'éléments réseau, lesdits éléments réseau étant un élément choisi dans la liste constitué d'un commutateur, d'un routeur ou d'un pare-feu.

En outre, selon les cas, chacun des éléments précités (commutateur 26, routeur 28 pare-feu 30 et interface réseau 32) est de nature physique ou virtuelle.

L'ensemble d'éléments réseau 11 forme un premier environnement E1 de la machine virtuelle MV.

Un tel premier environnement E1 de la machine virtuelle MV peut être vu comme l'environnement réseau de démarrage de la machine virtuelle MV.

Le fonctionnement de la machine virtuelle MV est maintenant décrit en référence à un exemple de mise en œuvre d'un procédé de contrôle du système informatique distribué 8.

Selon l'exemple décrit, le procédé de contrôle est mis en œuvre lors d'un démarrage de la machine virtuelle MV.

Par exemple, le procédé de contrôle est mis en œuvre lors de l'instanciation de la machine virtuelle MV.

A titre d'illustration, le procédé de contrôle est mis en œuvre après le processus de boot de la machine virtuelle MV mais avant l'initialisation de la machine virtuelle MV.

En variante, le procédé de contrôle est mis en œuvre pendant l'initialisation de la machine virtuelle MV.

Par ailleurs, par rapport aux éléments de l'environnement, le procédé de contrôle est mis en œuvre après le démarrage du système de gestion des fichiers de la machine virtuelle MV mais avant le processus de démarrage des éléments du premier environnement E1 de la machine virtuelle MV.

Un tel procédé de contrôle peut ainsi être vu comme un processus informatique.

Un processus est un programme en cours d'exécution par un ordinateur.

Le procédé de contrôle comporte une première étape d'instanciation E50, une étape de transfert E52, une étape d'activation E54, une deuxième étape d'instanciation E56 et une étape de démarrage E58.

Lors de la première étape d'instanciation E50, un deuxième environnement E2 est instancié.

Le deuxième environnement E2 est formé d'un ensemble d'éléments réseau virtuels.

La première étape d'instanciation E50 vise à obtenir un deuxième environnement E2 isolé du premier environnement E1.

Le deuxième environnement E2 est donc différent du premier environnement E1.

Les éléments réseau virtuels ne sont pas visibles du premier environnement E1 et il n'est pas possible d'accéder à ces éléments.

Selon l'exemple illustré, le deuxième environnement E2 étant contrôlable par un droit d'accès strictement inférieur au droit d'accès maximal pour la machine virtuelle MV.

Les droits d'accès de l'opérateur de Cloud sur ce deuxième environnement E2 sont les droits de plus haut niveau sur cet environnement et sont nécessaires à l'instanciation des éléments réseaux de l'environnement E2 de la machine virtuelle MV.

Le droit d'accès est alors le droit d'accès qui a été conféré à la machine virtuelle MV par l'opérateur de cloud.

Un tel deuxième environnement E2 est souvent instancié sous la forme d'espace de nommage de réseau qui renvoie à la dénomination anglaise de « net namespace ». Le terme espace de nommage désigne en informatique un lieu abstrait conçu pour accueillir des éléments dont la portée ou l'accessibilité sont réduites à un groupe d'acteurs déterminés ou identifiés par le nom de l'espace de nommage.

Selon l'exemple illustré, la première étape d'instanciation E50 du deuxième environnement E2 est mise en œuvre par utilisation d'un conteneur.

En informatique, un conteneur est une structure de données, une classe, ou un type de données abstrait, dont les instances représentent des collections d'autres objets. Autrement dit, les conteneurs sont utilisés pour mémoriser des objets sous une forme organisée qui suit des règles d'accès spécifiques.

Lors de l'exécution d'un conteneur, il est créé un environnement réseau dédié à l'espace d'exécution du conteneur. Par construction, un tel environnement réseau est un environnement isolé du premier environnement E1. L'environnement réseau du conteneur est, ainsi, un exemple de deuxième environnement E2.

Il est à noter que toute autre technologie permettant l'isolation d'environnements réseaux au sein d'une même machine virtuelle est utilisable lors de la première étape d'instanciation E50.

Lors de l'étape de transfert E52, au moins un élément réseau du premier environnement E1 est transféré vers le deuxième environnement E2.

De préférence, comme c'est le cas pour le présent exemple, chaque élément réseau du premier environnement E1 est transféré vers le deuxième environnement E2.

Dans un mode de réalisation particulier, tous les éléments réseaux fournis par l'opérateur de Cloud sont des interfaces réseau 32.

Toujours pour garantir une certaine clarté du propos, les développements qui suivent le sont en supposant que le transfert a lieu pour tous les éléments réseau, la transposition au cas du transfert de moins d'éléments réseau étant immédiate.

Les éléments réseau fournis par l'opérateur de cloud deviennent donc invisibles pour le premier environnement E1.

Il est maintenant détaillé un exemple pratique de mise en œuvre d'un transfert vers un deuxième environnement E2.

Par exemple, dans l'environnement Linux, l'ensemble des fonctionnalités des réseaux sont implémentées dans des environnements appelés "net namespace", souvent abrégé en "netns".

A l'initialisation d'une machine virtuelle, l'ensemble de ces fonctionnalités réseaux est mis en oeuvre dans l'environnement "netns" associé au processus init. Par définition, le processus init dispose des droits de plus haut niveau et peut tout faire sur la machine (notamment lancer les processus d'initialisation des éléments réseaux et de la machine virtuelle). Dans la suite, on appelle l'environnement netns associé au processus init « default ».

Dans le cas d'un container, un environnement netns est créé pour la mise en œuvre de fonction(s) réseau(x) de cet environnement "netns". Cet environnement netns est associé à l'ensemble des processus du container (en fait au processus init du container).

Pour la suite, on appelle l'environnement netns associé au container sous l'appellation « container ».

Dans le cas d'une interface réseau eth0 créée initialement dans le netns « default », l'étape de transfert est mise en œuvre en transférant logiquement l'interface dans le nets . « container ». La commande suivante :
ip link set dev eth0 netns container
exécutée avec les droits de plus haut niveau dans un environnement ayant les droits d'accès au netns default, permettra le transfert de l'interface.

Une fois cette commande exécutée, l'interface eth0 n'est plus visible dans le netns « default ». L'interface eth0 devient visible et utilisable dans le netns « container » dans lequel elle a été transférée.

L'interface eth0 d'un premier environnement a bien été transférée vers un deuxième environnement.

Lors de l'étape d'activation E54, au moins un élément réseau transféré est activé.

Par exemple, lors de l'étape d'activation E54, il est procédé au démarrage (ou redémarrage) de chaque élément réseau transféré dans le deuxième environnement E2. Autrement formulé, dans le deuxième environnement E2, chaque élément réseau transféré depuis le premier environnement E1 est démarré.

Dans le mode de réalisation particulier où tous les éléments réseau sont des interfaces réseau 32, les interfaces réseau 32 sont activées dans le deuxième environnement E2.

Avantageusement, une telle étape d'activation E54 n'est pas mise en œuvre en disposant des droits d'accès de plus haut niveau sur la machine virtuelle MV mais avec des droits d'accès de niveau inférieur.

Il est alors possible de mettre en œuvre les processus de l'opérateur de cloud qui auraient eu lieu dans le premier environnement E1 lors d'un démarrage sans les droits d'accès de plus haut niveau de la machine virtuelle MV par la mise en œuvre du présent procédé de contrôle.

Les dispositifs d'autoconfiguration ou des exécutables spécifiques sont des exemples de tels processeurs de l'opérateur de cloud.

Ces processus de l'opérateur de cloud ne peuvent donc agir que sur le deuxième environnement E2. Le premier environnement E1 reste isolé de la mise en œuvre, éventuellement dangereuse, de ces processus.

En variante ou en complément, des processus de récupération d'information peuvent être mis en œuvre pour améliorer la mise en œuvre des étapes ultérieures du procédé de contrôle.

Parmi les processus de récupération d'information, il peut notamment être cité les processus de récupération des adresses IP et de règles de routage échangées par les processus utilisant le protocole DHCP. Les outils de configuration automatiques comme « cloud-init » permettant la configuration des machines virtuelles MV au démarrage, mais également les outils de configuration de masse comme basé sur l'exécution à travers le réseau de logiciel d'échange de données ou de configuration. Parmi ces logiciels on retrouve entre autres Ansible ^{®}, Puppet ^{®} ou SaltStack ^{®}.

Selon un autre exemple, il est utilisé des procédés d'échange de clés permettant l'instanciation d'un tunnel chiffré ainsi que des procédés permettant l'instanciation de ce tunnel permettant le chiffrement de tous les flux en visibilité de l'opérateur de Cloud.

Chacun des processus précités est, selon un autre mode de réalisation, mis en œuvre par un conteneur ne disposant pas des droits d'accès de plus haut niveau sur la machine virtuelle MV.

Lors de la deuxième étape d'instanciation E56, au moins une liaison entre le premier environnement E1 et au moins un élément réseau du deuxième environnement E2 est instanciée.

Une telle deuxième étape d'instanciation E56 peut ainsi être considérée comme une étape de raccordement.

Une telle liaison permet de raccorder la machine virtuelle MV à une partie du système informatique distribué 8 par l'intermédiaire de processus contrôlables uniquement par une entité disposant d'un droit d'accès strictement inférieur au droit de plus haut niveau sur la machine virtuelle MV. Ainsi, dans l'exemple décrit, la liaison n'est pas contrôlée par l'opérateur de cloud.

Par exemple, la machine virtuelle MV génère une liaison virtuelle dans le premier environnement E1, liaison qui est destinée à être raccordée aux éléments réseau du deuxième environnement E2.

La liaison générée comporte deux extrémités dont l'une est ensuite transférée vers le deuxième environnement E2 afin d'être raccordée aux éléments réseau du deuxième environnement E2 et l'autre à une interface instanciée par la machine virtuelle MV avec les droits de plus haut et faisant partie du premier environnement E1. L'ensemble des équipements de réseau de l'environnement E1 n'est alors accessible qu'avec les droits de plus haut niveau de la machine virtuelle MV. Cela signifie que l'ensemble des équipements de réseau de l'environnement E1 est inaccessible au logiciel mis en œuvre par le système distribué 8 qui s'exécute dans le deuxième environnement E2.

Une telle liaison joue ainsi le rôle d'une interface entre le système informatique distribué 8 et la machine virtuelle MV.

Lors de l'étape de démarrage E58, au moins la liaison instanciée est démarrée.

En outre, l'ensemble des éléments réseau du premier environnement E1 sont démarrés par la machine virtuelle MV avec les droits d'accès de plus haut niveau sur la machine virtuelle MV.

A titre d'exemple, l'étape de démarrage E58 comporte la configuration des fonctions réseaux mise en œuvre dans le deuxième environnement E2 puis le démarrage des logiciels permettant la réalisation des fonctions réseaux nécessaires aux fonctionnements des équipements réseaux réels ou virtuels du deuxième environnement E2.

L'étape de démarrage E58 comporte également l'activation des deux extrémités de l'au moins une liaison reliant le premier environnement E1 au deuxième environnement E2, la configuration des fonctions réseaux mise en œuvre dans le premier environnement E1 et le démarrage des logiciels permettant la réalisation des fonctions réseaux nécessaires au fonctionnement des fonctions réseaux de la machine virtuelle MV.

Le procédé de contrôle permet ainsi que, quelles que soient les informations transmises lors du démarrage de la machine virtuelle MV, et notamment lors de l'initialisation des éléments réseaux fournis par l'opérateur de cloud, l'utilisateur qui dispose des droits d'accès de plus haut niveau sur la machine virtuelle MV garde la maîtrise des droits et des données sans jamais fournir l'accès de droit au plus haut niveau à l'opérateur du cloud.

Le procédé de contrôle permet ainsi de s'affranchir de contraintes liées à l'opérateur du cloud garantissant une certaine indépendance à l'utilisateur de la machine virtuelle VM vis-à-vis de l'infrastructure 9.

Ainsi, le procédé de contrôle permet une meilleure portabilité d'une machine virtuelle VM tout en conservant un bon niveau de sécurité de l'ensemble des éléments faisant partie du système informatique distribué 8.

D'autres modes de réalisation sont envisageables pour le procédé de contrôle qui vient d'être décrit, ces modes de réalisation pouvant être combinés avec le procédé de contrôle lors que ces modes de réalisation sont techniquement compatibles avec un tel procédé.

Ainsi, lors de l'étape de démarrage E58, d'autres éléments réseau que les éléments réseau transférés peuvent également être instanciés. Les logiciels nécessaires à l'instanciation de ces éléments réseau sont exécutés en disposant des droits inférieurs au droit maximum d'accès à la machine virtuelle MV.

De tels éléments réseau sont souvent adaptés à mettre en œuvre des fonctions de réseau plus complexes. Ces fonctions de réseau plus complexes peuvent comprendre entre autres la mise en œuvre de tunnels chiffrés fournissant des services identiques à une interface réseau 32.

Dans un mode de réalisation particulier, la mise en œuvre d'un ou plusieurs switch virtuel mis en œuvre dans le deuxième environnement E2, la mise en œuvre d'un ou plusieurs routeurs virtuels et la mise en œuvre de logiciel d'élaboration de table de routage notamment ceux basés sur des protocoles de routage automatique tels que BGP ou OSPF. Le sigle BGP renvoie à la dénomination anglaise de « Border Gateway Protocol » qui signifie littéralement protocole de passerelle de bord et le sigle OSPF renvoie à la dénomination anglaise de « Open Shortest Path First » qui signifie littéralement premier chemin ouvert le plus court.

Selon un autre mode de réalisation ou en complément, l'étape de démarrage E58 comprend l'instanciation des éléments réseau permettant la réalisation de ces fonctions complexes et notamment l'instanciation de tous les équipements de réseaux, tunnels, interfaces permettant la réalisation des fonctions complexes demandées dans le deuxième environnement E2, ainsi que l'instanciation des liaisons entre tous ces équipements de réseau dans le deuxième environnement E2.

Selon un mode de réalisation pour l'étape de démarrage E58, il est utilisé au moins un pont réseau. Un pont réseau réalise une fonction de commutation de niveau 2 selon le modèle OSI. Le modèle OSI (sigle renvoyant à la dénomination anglaise de « Open Systems Interconnection » signifiant littéralement « interconnection de réseaux ouverts ») est une norme de communication, en réseau, de tous les systèmes informatiques.

Dans chacun des cas proposés L'instanciation des équipements de réseau nécessaires à la réalisation de ces fonctions complexes n'est pas mise en œuvre en disposant des droits d'accès de plus haut niveau sur la machine virtuelle MV mais avec des droits d'accès de niveau inférieur.

Dans un mode de réalisation particulier, il est utilisé un conteneur disposant de droit d'accès de niveau inférieur.

Selon un autre mode de réalisation de l'étape de démarrage E58, il est utilisé au moins un routeur. Un routeur réalise une fonction de commutation de niveau 3 selon le modèle OSI.

Selon encore un autre mode de réalisation, lorsque des informations complémentaires ont été obtenues lors de l'étape d'activation E54, la liaison est, de préférence, réalisée à l'aide du routeur et de logiciels fournissant des fonctions dédiées.

Une fonction dédiée est, par exemple, un service de configuration des adresses IP par DHCP. Le sigle DHCP renvoie à la dénomination anglaise de « Dynamic Host Configuration Protocol » signifiant littéralement protocole de configuration dynamique des hôtes et désigne un protocole réseau dont le rôle est d'assurer la configuration automatique des paramètres IP d'une station ou d'une machine, notamment en lui attribuant automatiquement une adresse IP et un masque de sous-réseau.

En variante, une fonction dédiée est un service de résolution de noms ou un serveur de configuration de la machine virtuelle MV.

De préférence, les logiciels fournissant les fonctions dédiées ne sont pas mis en œuvre en disposant des droits d'accès de plus haut niveau sur la machine virtuelle MV mais avec des droits d'accès de niveau inférieur.

Par ailleurs, il est à noter que d'autres modes de réalisation sont obtenus en mettant en œuvre les étapes précitées de manière différente du procédé de contrôle qui a été décrit à titre d'exemple.

Ainsi, l'étape d'activation E54 est par nature indépendante des étapes précédentes et n'est donc pas dans un séquencement contraint au regard des autres étapes du procédé.

L'étape d'activation E54 trouve un avantage particulier à être mise en œuvre après l'étape de transfert E52 dans la mesure où cela garantit que les logiciels nécessaires à la mise en œuvre de la liaison avec le système distribué sont tous exécutés avec des droits strictement inférieurs au droit maximum de la MV.

L'étape d'activation E54 trouve également un avantage particulier à être mise en œuvre avant l'étape de démarrage E58 car l'étape d'activation E54 peut produire les informations nécessaires à l'étape de démarrage E58.

L'étape d'activation E54 n'est pas dépendante de la mise en œuvre de la deuxième étape d'instanciation E56 qui peut se produire avant ou après la mise en œuvre de l'étape d'activation E54.

Selon un autre exemple, la deuxième étape d'instanciation E56 peut être mise en œuvre à tout moment après la création du deuxième environnement E2 de première étape d'instanciation E50 et ne permet la réalisation des fonctions attendues qu'une fois l'étape de démarrage E58 terminée.

## Revendications

1. Procédé de contrôle d'un système informatique distribué (8), le système informatique distribué (8) comprenant au moins une machine virtuelle (MV) et un ensemble d'éléments réseau (11), l'ensemble d'éléments réseau (11) formant un premier environnement (E1) de la machine virtuelle (MV), le procédé de contrôle étant mis en œuvre par la machine virtuelle (MV) et comprenant, lors d'un démarrage de la machine virtuelle (MV), les étapes de :
- instanciation d'un deuxième environnement (E2) formé d'un ensemble d'éléments réseau virtuels, le deuxième environnement (E2) étant différent du premier environnement (E1),
- transfert d'au moins un élément réseau du premier environnement (E1) vers le deuxième environnement (E2),
- activation de l'au moins un élément réseau transféré,
- instanciation d'au moins une liaison entre le premier environnement (E1) et au moins un élément réseau du deuxième environnement (E2), l'étape d'instanciation étant mise en œuvre en :
- générant une liaison destinée à être raccordée aux éléments réseau du deuxième environnement (E2), la liaison comportant deux extrémités,
- transférant une extrémité de la liaison vers le deuxième environnement (E2) afin d'être raccordée aux éléments réseau du deuxième environnement (E2),
- transférant l'autre extrémité de la liaison à une interface faisant partie du premier environnement (E1), l'interface étant instanciée par la machine virtuelle (MV) avec le droit d'accès maximal à la machine virtuelle (MV),
les étapes d'activation et d'instanciation de l'au moins une liaison étant mises en œuvre avec un droit d'accès strictement inférieur au droit d'accès maximal à la machine virtuelle (MV), et
- démarrage de l'au moins une liaison instanciée.

2. Procédé de contrôle selon la revendication 1, dans lequel chaque élément réseau est choisi dans la liste constituée d'un commutateur, d'un routeur et d'un pare-feu.

3. Procédé de contrôle selon la revendication 1 ou 2, dans lequel l'étape d'instanciation d'au moins une liaison comporte l'utilisation d'un pont réseau ou d'un routeur.

4. Procédé de contrôle selon l'une quelconque des revendications 1 à 3, dans lequel l'étape d'instanciation d'un deuxième environnement (E2) est mise en œuvre par utilisation d'un conteneur.

5. Procédé de contrôle selon l'une quelconque des revendications 1 à 4, dans lequel le contrôle du système informatique distribué (8) correspond à un droit d'accès maximal, le deuxième environnement (E2) étant contrôlable par un droit d'accès strictement inférieur au droit d'accès maximal.

6. Machine virtuelle (MV) propre à mettre en œuvre un procédé de contrôle d'un système informatique distribué (8), le système informatique distribué (8) comprenant au moins la machine virtuelle (MV) et un ensemble d'éléments réseau, l'ensemble d'éléments réseau formant un premier environnement (E1) de la machine virtuelle (MV), la machine virtuelle (MV) étant propre à, lors d'un démarrage de la machine virtuelle (MV) :
- instancier un deuxième environnement (E2) formé d'un ensemble d'éléments réseau virtuels, le deuxième environnement (E2) étant différent du premier environnement (E1),
- transférer d'au moins un élément réseau du premier environnement (E1) vers le deuxième environnement (E2),
- activer l'au moins un élément réseau transféré,
- instancier l'au moins une liaison entre le premier environnement (E1) et au moins un élément réseau du deuxième environnement (E2), la machine virtuelle (MV) étant propre à instancier l'au moins une liaison en :
- générant une liaison destinée à être raccordée aux éléments réseau du deuxième environnement (E2), la liaison comportant deux extrémités,
- transférant une extrémité de la liaison vers le deuxième environnement (E2) afin d'être raccordée aux éléments réseau du deuxième environnement (E2),
- transférant l'autre extrémité de la liaison à une interface faisant partie du premier environnement (E1), l'interface étant instanciée par la machine virtuelle (MV) avec le droit d'accès maximal à la machine virtuelle (MV), l'activation et l'instanciation étant mises en œuvre avec un droit d'accès strictement inférieur au droit d'accès maximal à la machine virtuelle (MV), et
- démarrer l'au moins une liaison instanciée.

7. Système informatique distribué (8) comprenant au moins une machine virtuelle (MV) selon la revendication 6.

## Patentansprüche

1. Steuerungsverfahren eines verteilten Computersystems (8), das verteilte Computersystem (8) umfassend mindestens eine virtuelle Maschine (MV) und einen Satz von Netzelementen (11), wobei der Satz von Netzelementen (11) eine erste Umgebung (E1) der virtuellen Maschine (MV) bildet, wobei das Steuerungsverfahren von der virtuellen Maschine (MV) implementiert wird und bei einem Start der virtuellen Maschine (MV) die folgenden Schritte umfasst:
- Instanziierung einer zweiten Umgebung (E2), die aus einen Satz virtueller Netzelemente gebildet ist, wobei sich die zweite Umgebung (E2) von der ersten Umgebung (E1) unterscheidet,
- Übertragung von mindestens einem Netzelement der ersten Umgebung (E1) in die zweite Umgebung (E2),
- Aktivierung des mindestens einen übertragenen Netzelements,
- Instanziierung mindestens einer Verbindung zwischen der ersten Umgebung (E1) und mindestens einem Netzelement der zweiten Umgebung (E2), wobei der Instanziierungsschritt implementiert wird durch:
- Erzeugen einer Verbindung, die dazu bestimmt ist, mit den Netzelementen der zweiten Umgebung (E2) verbunden zu werden, die Verbindung umfassend zwei Enden,
- Übertragen eines Endes der Verbindung an die zweite Umgebung (E2), um mit den Netzelementen der zweiten Umgebung (E2) verbunden zu werden,
- Übertragen des anderen Endes der Verbindung an eine Schnittstelle, die Teil der ersten Umgebung (E1) ist, wobei die Schnittstelle durch die virtuelle Maschine (MV) mit dem maximalen Zugriffsrecht auf die virtuelle Maschine (MV) instanziiert wird,
wobei die Schritte einer Aktivierung und Instanziierung der mindestens einen Verbindung mit einem Zugriffsrecht implementiert werden, das strikt unter dem maximalen Zugriffsrecht auf die virtuelle Maschine (MV) ist, und
- Starten der mindestens einen instanziierten Verbindung.

2. Steuerungsverfahren nach Anspruch 1, wobei jedes Netzelement ausgewählt ist aus der Liste, bestehend aus einem Switch, einem Router und einer Firewall.

3. Steuerungsverfahren nach Anspruch 1 oder 2, wobei der Instanziierungsschritt für mindestens einer Verbindung die Verwendung einer Netzbrücke oder eines Routers umfasst.

4. Steuerungsverfahren nach einem der Ansprüche 1 bis 3, wobei der Instanziierungsschritt einer zweiten Umgebung (E2) durch die Verwendung eines Containers implementiert wird.

5. Steuerungsverfahren nach einem der Ansprüche 1 bis 4, wobei die Steuerung die Kontrolle des verteilten Computersystems (8) einem maximalen Zugriffsrecht entspricht, wobei die zweite Umgebung (E2) durch ein Zugriffsrecht steuerbar ist, das strikt unter dem maximalen Zugriffsrecht ist.

6. Virtuelle Maschine (MV), die geeignet ist, um ein Steuerungsverfahren eines verteilten Computersystems (8) zu implementieren, das verteilte Computersystem (8) umfassend mindestens die virtuelle Maschine (MV) und einen Satz von Netzelementen, wobei der Satz von Netzelementen eine erste Umgebung (E1) der virtuellen Maschine (MV) bildet, wobei die virtuelle Maschine (MV) bei einem Start der virtuellen Maschine (MV) zu Folgendem geeignet ist:
- Instanziieren einer zweiten Umgebung (E2), die aus einer Anordnung virtueller Netzelemente gebildet ist, wobei sich die zweite Umgebung (E2) von der ersten Umgebung (E1) unterscheidet,
- Übertragen von mindestens einem Netzelement der ersten Umgebung (E1) in die zweite Umgebung (E2),
- Aktivieren des mindestens einen übertragenen Netzelements,
- Instanziieren der mindestens einen Verbindung zwischen der ersten Umgebung (E1) und mindestens einem Netzelement der zweiten Umgebung (E2), wobei die virtuelle Maschine (MV) geeignet ist, um die mindestens eine Verbindung zu instanziieren, durch:
- Erzeugen einer Verbindung, die dazu bestimmt ist, mit den Netzelementen der zweiten Umgebung (E2) verbunden zu werden, die Verbindung umfassend zwei Enden,
- Übertragen eines Endes der Verbindung an die zweite Umgebung (E2), um mit den Netzelementen der zweiten Umgebung (E2) verbunden zu werden,
- Übertragen des anderen Endes der Verbindung an eine Schnittstelle, die Teil der ersten Umgebung (E1) ist, wobei die Schnittstelle durch die virtuelle Maschine (MV) mit dem maximalen Zugriffsrecht auf die virtuelle Maschine (MV) instanziiert wird, wobei das Aktivieren und Instanzieren mit einem Zugriffsrecht implementiert werden, das strikt unter dem maximalen Zugriffsrecht auf die virtuelle Maschine (MV) ist, und
- Starten der mindestens einen instanziierten Verbindung.

7. Verteiltes Computersystem (8), umfassend mindestens eine virtuelle Maschine (VM) nach Anspruch 6.

## Claims

1. A method of controlling a distributed computer system (8), the distributed computer system (8) comprising at least one virtual machine (VM) and a set of network elements (11), the set of network elements (11) forming a first environment (E1) of the virtual machine (VM), the control method being implemented by the virtual machine (VM) and comprising, during an initiation of the virtual machine (VM), the steps of:
- instantiating a second environment (E2) formed by a set of virtual network elements, the second environment (E2) being different from the first environment (E1),
- transferring at least one network element from the first environment (E1) to the second environment (E2),
- activating the at least one transferred network element,
- instantiating at least one link between the first environment (E1) and each network element of the second environment (E2), the step of instantiating being carried out by:
- generating a link intended for being connected to the network elements of the second environment (E2), the link comprising two ends,
- transferring one end of the link to the second environment (E2) in order to be connected to the network elements of the second environment (E2),
- transferring the other end of the link to an interface belonging to the first environment (E1), the interface being instantiated by the virtual machine (VM) with the highest-level of right of access to the virtual machine (VM),
the steps of activating and of instantiating of the at least one link being carried out with a level of right of access strictly inferior to the highest-level of right of access to the virtual machine (VM), and
- initiating the at least one instantiated link.

2. The control method according to claim 1, wherein each network element is selected from the list consisting of a switch, a router and a firewall.

3. The control method according to claim 1 or 2, wherein the step of instantiating at least one link comprises using a network bridge or router.

4. The control method according to any one of claims 1 to 3, wherein the step of instantiating a second environment (E2) is performed using a container.

5. The control method according to any one of claims 1 to 4, wherein the control of the distributed computer system (8) corresponds to a maximum right of access, the second environment (E2) being controllable by a right of access strictly lower than the maximum right of access.

6. A virtual machine (VM) suitable for implementing a method of controlling a distributed computer system (8), the distributed computer system (8) comprising at least the virtual machine (VM) and a set of network elements, the set of network elements forming a first environment (E1) of the virtual machine (VM), the virtual machine (VM) being suitable for, during an initiation of the virtual machine (VM):
- instantiating a second environment (E2) formed by a set of virtual network elements, the second environment being different from the first environment (E1),
- transferring at least one network element from the first environment (E1) to the second environment (E2),
- activating the at least one transferred network element,
- instantiating the at least one link between the first environment (E1) and each network element of the second environment (E2), the virtual machine (VM) being adapted to instantiate the at least one link by:
- generating a link intended for being connected to the network elements of the second environment (E2), the link comprising two ends,
- transferring one end of the link to the second environment (E2) in order to be connected to the network elements of the second environment (E2),
- transferring the other end of the link to an interface belonging to the first environment (E1), the interface being instantiated by the virtual machine (VM) with the highest-level of right of access to the virtual machine (VM), the activating and the instantiating of the at least one link being carried out with a level of right of access strictly inferior to the highest-level of right of access to the virtual machine (VM), and
- initiating the at least one instantiated link.

7. A distributed computer system (8) comprising at least one virtual machine (VM) according to claim 6.
